# EUROPEAN PATENT APPLICATION

(11) **EP 4 064 547 A1**
(43) Date of publication of application: **28.09.2022**
(21) Application number: 21382239.8
(22) Date of filing: 24.03.2021
(51) Int. Cl.: H02M 7/487

(54) **MULTILEVEL POWER CONVERTER DEVICE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The invention relates to a multilevel power converter device comprising a low switching frequency stage (100) having low frequency power switching devices (T1,T2,T3,T4) coupled across an input voltage terminal (Vdc), and a high switching frequency stage (200) having high frequency power switching devices (T5,T6) coupled to the low switching frequency stage (100), each high frequency power switching device (T5,T6) of the high switching frequency stage (200) is configured to switch at a higher frequency as compared to each low frequency power switching device (T1,T2,T3,T4) of the low switching frequency stage (100), and each high frequency power switching device (T5,T6) of the high switching frequency stage (200) have a low frequency power switching device (T7,T8) electrically connected in parallel.

## Description

### TECHNICAL FIELD

The present invention relates to a multilevel power converter device, specifically to a three level ANPC power converter device.

### BACKGROUND

Multilevel power converter devices are becoming more popular for power conversion applications of renewable energy. According to some parameters e.g. voltage level, semiconductor voltage rating, THD Total Harmonic Distortion criteria etc.; the power converter devices may be more feasible with multilevel topologies.

Active Neutral Point Clamped (ANPC) converter is one of the most popular topology among the multilevel converters. Three level (3L) topologies are the most used solution within the ANPC applications. Besides, five level (5L) ANPC and higher level ANPC topologies are also known.

ANPC converters are commonly built using only low frequency power switching devices, such as silicon Si based power switching devices. Besides high frequency power switching devices, such as silicon carbide (SiC) based power switching devices, are increasingly being used in power electronic devices as they provide superior performance characteristics relative to silicon (Si) based power switching devices. These SiC based devices have low switching losses at high switching rates e.g., around kilohertz (kHz) range; and may operate at higher temperatures if compared to Si-based devices. However, multilevel converters using exclusively SiC based power switching devices significantly increase the cost of the converter.

To redress this problem is known to use hybrid topologies using SiC and Si based switching devices in multilevel converters. The efficiency of the hybrid topology is better than the full Si based configuration and the total cost of hybrid topology is lower than the full SiC based configuration. Therefore, hybrid topology is a good choice for a better efficiency with slight increase in cost.

EP3174190A1 discloses a multilevel power converter device with a hybrid topology comprising a low switching frequency stage having low frequency power switching devices coupled across an input voltage terminal, and a high switching frequency stage having high frequency power switching devices coupled to the low switching frequency stage. Each high frequency power switching device of the high switching frequency stage is configured to switch at a higher frequency as compared to each low frequency power switching device of the low switching frequency stage. A converter with a hybrid topology has a high switching frequency stage with high frequency power switching devices of high current rating.

In conclusion, it would therefore be desirable to provide a converter having an improved efficiency at reasonable cost.

### SUMMARY OF THE INVENTION

In a first aspect, a multilevel power converter device is provided. The multilevel power converter device comprises a low switching frequency stage having low frequency power switching devices coupled across an input voltage terminal, and a high switching frequency stage having high frequency power switching devices coupled to the low switching frequency stage, each high frequency power switching device of the high switching frequency stage is configured to switch at a higher frequency as compared to each low frequency power switching device of the low switching frequency stage, and each high frequency power switching device of the high switching frequency stage have a low frequency power switching device electrically connected in parallel, and each high frequency power switching device of the high switching frequency stage is configured to switch at a higher frequency as compared to each low frequency power switching device of the high switching frequency stage.

By using a multilevel power converter device comprising such structure or configuration allows reducing manufacturing costs while having a similar efficiency performance if compared to prior art hybrid topology multilevel power converter devices. For example, EP3174190A1 discloses a multilevel power converter device with an hybrid topology comprising a high switching frequency stage having only high frequency power switching devices with high current rating, and also discloses to replace each high frequency power switching device of said hybrid topology with a hybrid switch comprising a low frequency power switching device electrically connected in parallel with a high frequency power switching device.

Thus, the power converter device employs high frequency power switching devices with lower current rating than the ones disclosed in EP3174190A1 reducing the cost. Apart from that, the hybrid switches benefit from ZVS (Zero Voltage Switching) in the high switching frequency stage, thus decreasing switching losses of the low frequency power switching devices of said high switching frequency stage. For that purpose, high frequency power switching device of each hybrid switch turns-on before and turns-off after the low frequency power switching device of said hybrid switch. According to this, a multilevel power converter device with a reduced cost but similar efficiency performance as the hybrid topology is obtained.

These and other advantages and features of the invention will become apparent in view of the figures and the detailed disclosure of the invention.

### DESCRIPTION OF THE DRAWINGS

Figure 1 schematically shows a prior art multilevel power converter device comprising only low frequency power switching devices, according to an example.
Figure 2 schematically shows a prior art multilevel power converter device comprising only high frequency power switching devices, according to an example.
Figure 3 schematically shows a prior art multilevel power converter device with a hybrid topology comprising low and high frequency power switching devices, according to an example.
Figure 4 schematically shows a multilevel power converter device with hybrid switches arranged in the high switching frequency stage, according to an example.
Figure 5 schematically shows a multilevel power converter device with (2n+1) level by using more than one group of hybrid switches connected in series in the high switching frequency stage, according to an example.
Figure 6 schematically shows a multilevel power converter device with high current capability by using more than one high switching frequency stage connected in parallel, according to an example.
Figure 7 schematically shows a multilevel power converter device with (2n+1) level as shown in Figure 5 and with high current capability as shown in Figure 6, according to an example.
Figures 8, 9 and 10 schematically show the hybrid switches of the high frequency stage, according to examples.

### DETAILED DESCRIPTION OF THE INVENTION

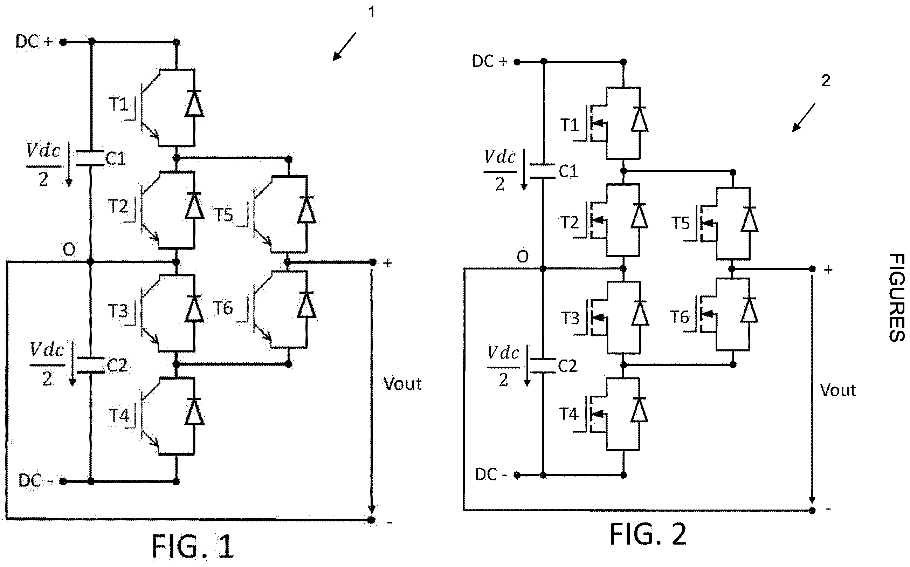

Figure 1 shows a schematic diagram of a prior art multilevel power converter device 1 according to an example. Namely, Figure 1 shows a Three Level Active Neutral Point Clamped (3L ANPC) converter 1 comprising six low frequency power switching devices T1-T6, e.g. Silicon Si IGBTs.

Figure 2 depicts a schematic diagram a prior art 3L ANPC converter 2 according to an example. The 3L ANPC converter 2 comprises six high frequency power switching devices T1-T6, e.g. Silicon Carbide SiC MOSFETs. The use of SiC MOSFETs improves the power converter efficiency and the power density as they allow operating at higher switching frequencies and higher temperatures if compared to Si IGBTs. However, the use of SiC MOSFETs instead of Si IGBTs significantly increases costs. That is, the converter of Figure 2 is more expensive to manufacture or involves high costs than the converter of Figure 1.

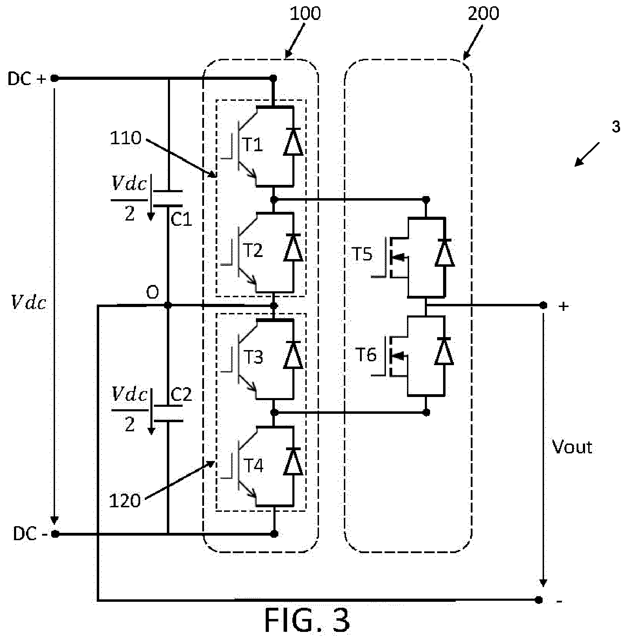

Figure 3 shows a schematic diagram of a prior art 3L ANPC converter 3 with a hybrid topology. The converter 3 of Figure 3 comprises a low switching frequency stage 100 having four low frequency power switching devices T1-T4 coupled across an input voltage terminal Vdc, and a high switching frequency stage 200 having two high frequency power switching devices T5,T6 coupled to the low switching frequency stage 100. Each high frequency power switching device T5,T6 of the high switching frequency stage 200 is configured to switch at a higher frequency as compared to each low frequency power switching device T1,T2,T3,T4 of the low switching frequency stage 100. In other words, the switching frequency of low frequency power switching devices T1-T4 may be lower than the switching frequency high frequency power switching devices T5, T6.

In the example of Figure 3, the low frequency power switching devices are Si IGBTs and the high frequency power switching devices are SiC MOSFETs. SiC MOSFETs are used only in the high switching frequency stage 200 while Si-IGBTs are used only in the low switching frequency stage 100.

The efficiency of the hybrid topology of the converter 3 of Figure 3 is better than the full Si IGBT configuration of Figure 1, and moreover, the total cost of such hybrid topology of Figure 3 is lower than the full SiC MOSFET example of Figure 2. Therefore, the hybrid topology seems to be a good choice for a better efficiency with slight increase in cost.

The examples herein below disclose alternative solutions to the existing prior art. Such examples disclose solutions having a further decrease in cost but without losing efficiency values as explained below.

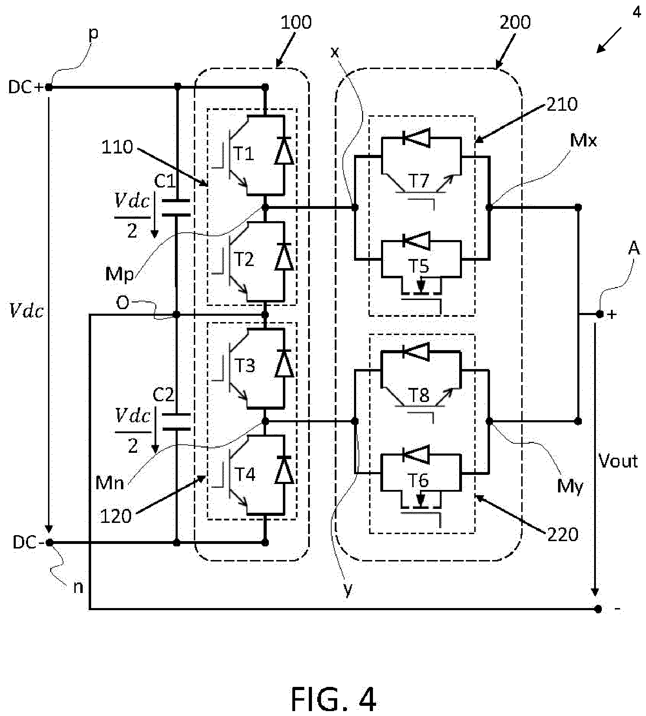

Figure 4 shows a schematic diagram of a multilevel power converter device 4 according to an example. The multilevel power converter device 4 may have a topology in the form of 3L ANPC converter having low and high frequency power switching devices so as to obtain the benefits from both types of switching devices. This topology may further decrease the converter cost but may have a similar efficiency performance when compared to the hybrid topology of the example of Figure 3.

Although Figure 4 schematically shows only one phase of a multilevel power converter device, such topology may be applied to all or any phase of the multilevel power converter device e.g. to any number of phases.

The multilevel power converter device 4 may comprise a low switching frequency stage 100 having low frequency power switching devices T1, T2, T3, T4 coupled across an input voltage terminal Vdc. The multilevel power converter device 4 may also comprise a high switching frequency stage 200 having high frequency power switching devices T5, T6 coupled to the low switching frequency stage 100. Each high frequency power switching device T5, T6 of the high switching frequency stage 200 may be configured to switch at a higher frequency as compared to each low frequency power switching device T1,T2,T3,T4 of the low switching frequency stage 100.

That is, each low frequency power switching devices T1,T2,T3,T4 may be configured to switch at a first switching frequency and each high frequency power switching device T5,T6 of the high switching frequency stage 200 may be configured to switch at a second switching frequency. Such second switching frequency may be higher than the first switching frequency of the low frequency power switching devices T1, T2, T3, T4.

Each high frequency power switching device T5, T6 of the high switching frequency stage 200 may comprise a low frequency power switching device T7, T8 electrically connected in parallel thereto.

By being connected in parallel, high frequency power switching devices T5,T6 and low frequency power switching devices T7,T8 of the high switching frequency stage 200 may be configured to switch at same frequency, which is higher than the switching frequency of the low frequency power switching devices T1,T2,T3,T4 of the low frequency stage 100.

The low switching frequency stage 100 may comprise a first set 110 of two low frequency power switching devices T1, T2 electrically coupled in series with each other and a second set 120 of two low frequency power switching devices T3,T4 electrically coupled in series with each other. The first set 110 may have a first output terminal Mp arranged between the power switching devices T1 and T2. The second set 120 may have a second output terminal Mn arranged between the power switching devices T3 and T4.

The high switching frequency stage 200 may comprise a first hybrid switch 210 coupled to the first output terminal Mp and a second hybrid switch 220 coupled to the second output terminal Mn. Each hybrid switch 210 and 220 may comprise at least a high frequency power switching device T5, T6 electrically connected in parallel with a low frequency power switching device T7, T8. The first and second hybrid switches 210 and 220 may be electrically coupled to an output voltage terminal A of the multilevel power converter device.

The multilevel power converter device 4 may comprise an input voltage terminal Vdc comprising a positive input terminal p and a negative input terminal n. The input voltage terminal Vdc may have a positive DC input voltage terminal p electrically coupled in series to a negative DC input voltage terminal n through a series connection of two capacitors C1 and C2. The capacitors C1 and C2 may be electrically connected to each other at an intermediate point O.

In an example, the two input voltage terminals p and n may also be electrically coupled in series through the first set 110 and the second set 120 of switching devices T1-T4. The two switching devices T1 and T2 of the first set 110 may be a first half bridge electrically coupled in series between the first input voltage terminal p and the intermediate point O, and the two switching devices T3 and T4 of the second set 120 may be a second half bridge electrically coupled in series between the intermediate point O and the second voltage terminal n.

The positive DC input voltage terminal p may be electrically coupled to the collector side of switching device T1, the intermediate point O may be electrically coupled to the emitter side of switching device T2, and the emitter side of switching device T1 may be electrically coupled to the collector side of switching device T2 through a first output terminal Mp. The negative DC input voltage terminal n may be electrically coupled to the emitter side of switching device T4, the intermediate point O may be electrically coupled to the collector side of switching device T3, and the collector side of switching device T3 may be electrically coupled to the emitter side of switching device T4 through a second output terminal Mp. The emitter side of switching device T2 may be electrically coupled to the collector side of switching device T3.

The first hybrid switch 210 may have an input terminal x electrically coupled to the first output terminal Mp. The input terminal x may be electrically coupled to the drain side of switching device T5 and to the collector side of switching device T7. The source side of switching device T5 and emitter side of switching device T7 may be electrically coupled to an output voltage terminal Mx of the first hybrid switch 210.

The second hybrid switch 220 may have an input terminal y electrically coupled to the second output terminal Mn. Input terminal y may be electrically coupled to the drain side of switching device T6 and collector side of switching device T8. The source side of switching device T6 and emitter side of switching device T8 may be electrically coupled to the output voltage terminal My of the second hybrid switch 220. The output voltage terminals Mx and My of first and second hybrid switches 210 and 220 may be electrically coupled to output voltage terminal A of the converter device 4.

Each power switching devices T1-T8 may comprise a diode electrically connected thereto in parallel e.g. in opposite forward direction.

The low frequency power switching devices T1, T2, T3, T4, T7, T8 may be silicon-based switching devices e.g. IGBTs, IGCTs, Si MOSFETs, thyristors or any combination thereof.

The high frequency power switching devices T5, T6 may be wide bandgap switching devices e.g. silicon carbide MOSFETs, silicon carbide FETs, Gallium nitride FETs, diamond semiconductors or a combination thereof.

In the examples of Figures 4 to 10, the low frequency power switching devices T1, T2, T3, T4, T7, T8 are Si IGBTs, and high frequency power switching devices T5 and T6 are SiC MOSFETs. However, any other suitable low frequency power switching devices and high frequency power switching devices may be used.

In an example, the interval frequency range of the power switching devices of the low switching frequency stage 100 may be below 1KHz. In an example, the interval frequency range of hybrid switches 210 and 220 may be between 1kHz-50kHz. The use of a parallel connection of IGBTs T7, T8 and SiC MOSFETs T5,T6 leads to an increase in the switching frequency capability of IGBTs. The IGBTs comprised in the hybrid switches 210 and 220 may have a higher switching frequency capability than the standalone operation conditions. The switching frequency (fsw) of the power switching devices T1, T2, T3, T4 may be equal to or below about 1kHz. The fsw of T5, T6, T7, T8 may be equal to or higher than about 1 kHz, and equal to or lower than about 50 kHz.

Each high frequency power switching device T5, T6 may be electrically connected in parallel with a low frequency power switching device T7, T8. Each high frequency power switching device T5, T6 may be configured to turn-on before and turn-off after the low frequency power switching device T7, T8. Such configuration allows minimizing the turn-on and turn-off losses of the low frequency power switching devices T7, T8.

For example, by having a parallel connection between the SiC MOSFET and IGBT, and as the SiC MOSFET may turns on before the IGBT and may turns off after the IGBT, a zero voltage switching (ZVS) may be provided for the IGBT thereby allowing a significant decrease of the turn-on and turn-off losses of the IGBT.

The multilevel power converter device 4 may be used to convert DC voltage signals to AC voltage signals, and vice versa. For example, the multilevel power converter device 4 may be used to connect a wind power generator to the grid in a wind energy conversion system. The wind power converters operate significantly at low load conditions, thus, improving efficiency at low current operations is an important issue redressed by the topology of Figure 4.

The multilevel power converter device 4 may be controlled by different PWM strategies. In an example, a processor of the converter may execute software applications that include programs to determine gate signals to provide to the power switching devices T1-T8, such that the switching devices may be switched on and off in a controlled manner. Therefore, a DC voltage signal provided via the input voltage terminals p and n may be converted into an AC voltage signal output provided at the output terminal A.

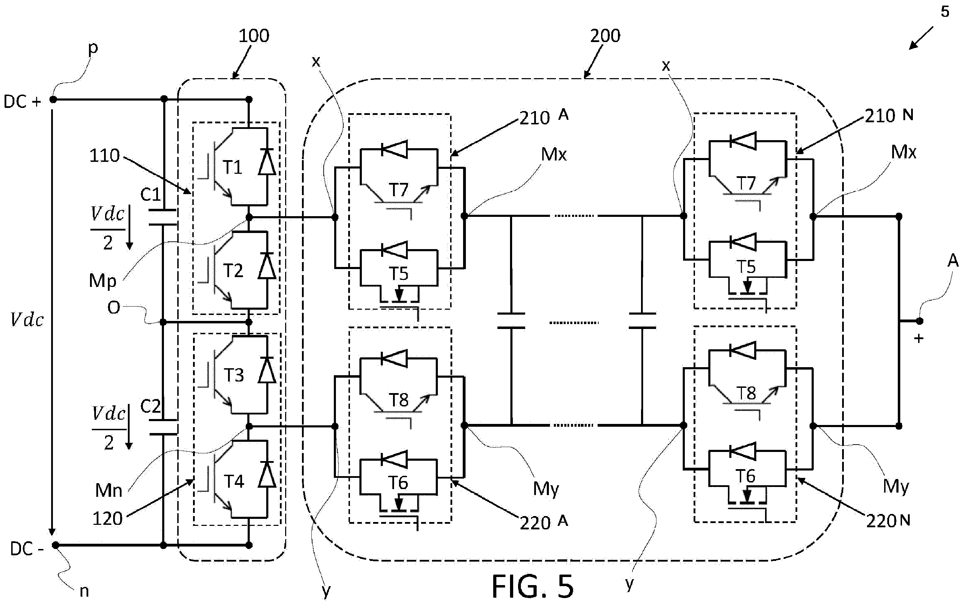

In Figures 5 - 7 modularity may be used in the high switching frequency stage 200 of the converter device thereby enables a further improvement.

Figure 5 shows a multilevel power converter device 5 with (2n+1) levels. The multilevel power converter device 5 may comprise a high switching frequency stage 200 and a low switching frequency stage 100 according to any of the disclosed examples.

The high switching frequency stage 200 may comprise more than one, i.e. a plurality, group of first hybrid switches 210A - 210N. The more than one groups of first hybrid switches 210A - 210N may be electrically connected in series.

In addition, high switching frequency stage 200 the more than one group of second hybrid switches (220A - 220N) arranged between the low switching frequency stage 100 and the output A of the device. The groups of second hybrid switches 220A - 220N may be electrically connected in series.

The output voltage terminal Mx of each first hybrid switch 210A is electrically coupled in series to the input terminal x of an subsequent first hybrid switch 210B and the output voltage terminal My of each second hybrid switch 220 may be electrically coupled in series to the input terminal y of another second hybrid switch 220. The output voltage terminals Mx and My of the last group of first hybrid switches 210N and of the last group of second hybrid switches 220N may be electrically coupled to the output voltage terminal A of the converter device.

In an example, the high switching frequency stage 200 may further comprise an energy storage device. The energy storage device may comprise a plurality of capacitors which may be electrically coupled to the output voltage terminals Mx and My of the hybrid switches 210 and 220, respectively.

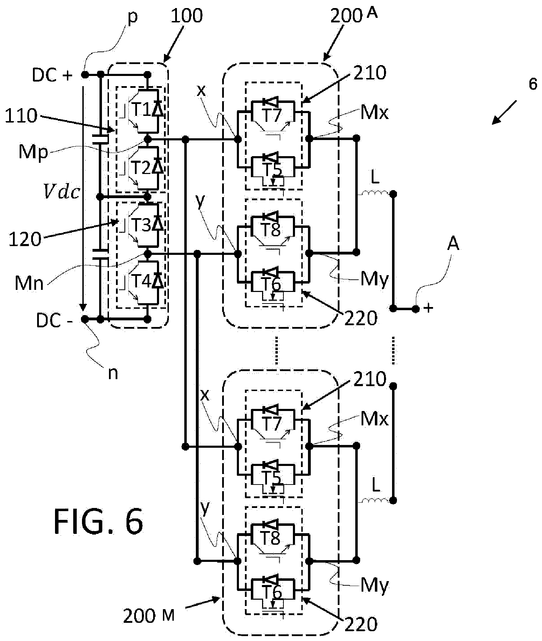

Figure 6 depicts a multilevel power converter device 6 which may comprise high switching frequency stage 200 and a low switching frequency stage 100 according to any of the disclosed examples.

The multilevel power converter device 6 may additionally comprise more than one high switching frequency stage 200A - 200M. The more than one high switching frequency stages 200A - 200M may be electrically connected in parallel. Each high switching frequency stage 200A - 200M may comprise at least a hybrid switch 210, 220 according to any of the disclosed examples. By using several hybrid switches 210, 220 a high current capability may be obtained. The input terminals x of the first hybrid switches 210 of each high switching frequency stage 200 may be electrically connected in parallel therebetween. The input terminals y of the second hybrid switches 220 of each high switching frequency stage 200 may also be electrically connected in parallel therebetween.

In an example, a small-sized inductive filter L may be arranged at the output of each high switching frequency stage 200. This avoid using a main large filter at the output A of the converter device further reducing the cost of the converter device. A small-sized inductive filter may have an inductance value smaller than the value of the filter that may be used for the proposed topology (having the same power rating) with only one high switching frequency stage.

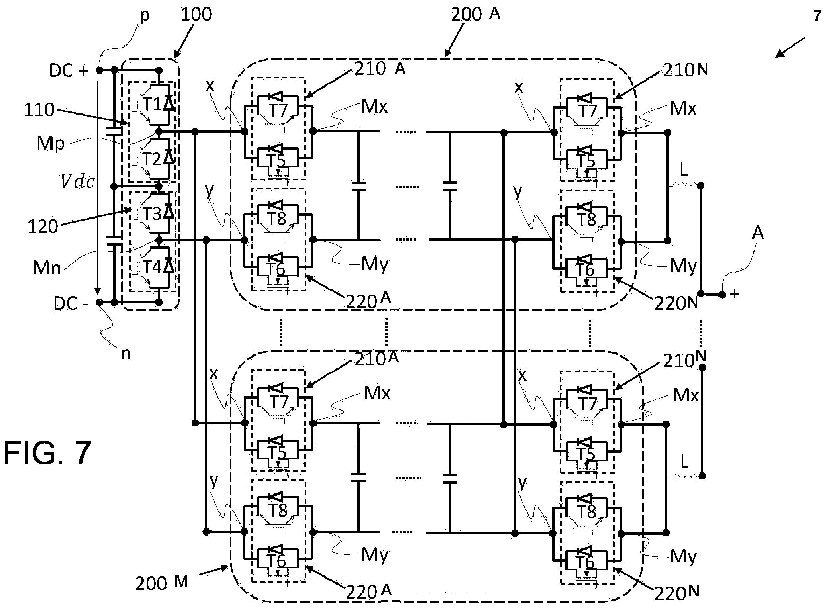

Figure 7 depicts a multilevel power converter device 7 which may have the multilevel topology shown in Figure 5, and the high current capability of the converter of Figure 6.

The multilevel power converter device 7 may comprise a low switching frequency stage 100 according to any of the disclosed examples and more than one high switching frequency stage 200A - 200M. Such more than one high switching frequency stages 200 may be electrically connected in parallel.

In addition, each high switching frequency stage 200A - 200M may comprise more than one, i.e. a plurality of, group(s) wherein each group may comprise a first hybrid switch 210A - 210N according to any of the disclosed examples, and a second hybrid switch 220A - 220N according to any of the disclosed example.

The plurality of groups may be arranged between the low switching frequency stage 100 and the output A of the device. The groups may be electrically connected in series. That is, all groups of first may be connected in series and all groups of seconds may be connected in series.

In addition, the multilevel power converter device 7 may further comprise a small-sized inductive filter L that may be arranged at the output of each high switching frequency stage 200. The use of such inductive filter(s) avoids using a main large filter at the output A of the converter device thereby further reducing the cost of the converter device. The small-sized inductive filter(s) may have an inductance value smaller than the value of the filter that may be used for the proposed topology (having the same power rating) with only one high switching frequency stage.

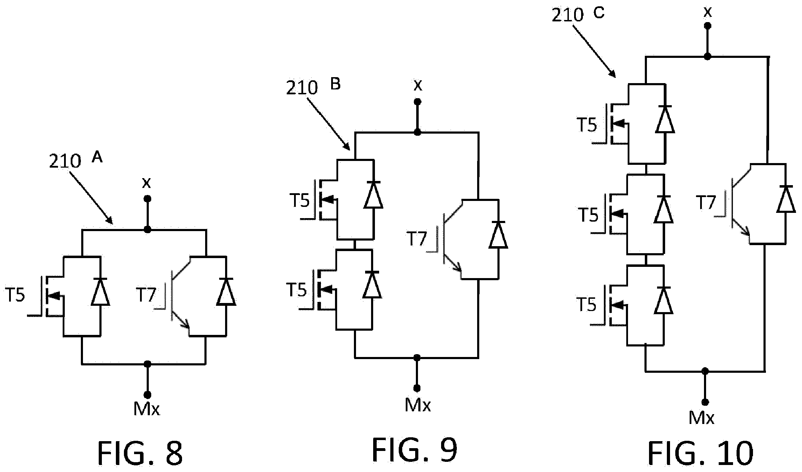

Figures 8 to 10 show three examples of the hybrid switches 210A - 210C, of the high frequency stage 200 for adapting to different voltage and current needs.

Figure 8 shows a hybrid switch 210A that may comprise a low frequency power switching device T7 that may be electrically connected in parallel with one high frequency power switching device T5.

Figure 9 shows a hybrid switch 210B which may comprise a low frequency power switching device T7 that may be electrically connected in parallel with two high frequency power switching devices T5. The high frequency power switching devices T5 may be identical and may be electrically connected in series therebetween.

Figure 10 shows a hybrid switch 210C which may comprise a low frequency power switching device T7 that may be electrically connected in parallel with three high frequency power switching devices T5. The high frequency power switching devices T5 may be identical and may be electrically connected in series therebetween.

In the examples of Figures 8 to 10, the low frequency power switching devices T7 may be e.g. Si IGBTs, and the high frequency power switching devices T5 may be e.g. SiC MOSFETs.

High frequency power switching devices T5, T6 of the high switching frequency stage 200 according to any of the disclosed examples, may have an equal or lower current rating compared with the low frequency power switching device T7 and T8 of said high switching frequency stage 200. That is, the current rating of each high frequency power switching device T5, T6 of a hybrid switch 210, 211 is equal to or smaller than e.g. about a 50% of the total current rating of the hybrid switch 210, 211.

The SiC based switching devices T5, T6 of examples depicted in Figures 4 to 10 may have a lower current rating than the SiC based switching devices T5, T6 of the example of Figure 3, e.g. a 1/5 lower current rating. Consequently, most of the current needs/requirements of the converter in each hybrid switch 210, 220 may be undertaken by the Si-based switching devices T7, T8. Thus, SiC based switching devices T5, T6 may have a lower current rating, considerably reducing the cost of said SiC based switching devices T5, T6.

Besides, the hybrid switch 210, 220 according to any of the disclosed examples, which are SiC based, may have much lower switching losses than Si-based switching devices due to the fast switching speed and the related material property. Therefore, the switching losses of the hybrid switch may be dominated by the switching losses of the Si based devices, which can be significantly reduced if all the turn-on and turn-off actions are undertaken by the SiC based devices of the hybrid switches. For that purposes, SiC MOSFET is turned on earlier and turned off later compared to the IGBT, by doing this, almost zero voltage switching ZVS can be achieved in the IGBT at the turn-on and turn-off instants due to the very low on-state voltage across the IGBT. Thus, by using hybrid switches a hybrid topology multilevel power converter of reduced cost and good performance is obtained.

Although the present invention has been described in detail with reference to the preferred embodiment, it is to be under-stood that the present invention is not limited by the dis-closed examples, and that numerous additional modifications and variations could be made thereto by a person skilled in the art without departing from the scope of the invention.

## Claims

1. A multilevel power converter device comprising:
a low switching frequency stage (100) having low frequency power switching devices (T1,T2,T3,T4) coupled across an input voltage terminal (Vdc), wherein each low frequency power switching devices (T1,T2,T3,T4) is configured to switch at a first switching frequency, and
a high switching frequency stage (200) having high frequency power switching devices (T5,T6) coupled to the low switching frequency stage (100), wherein each high frequency power switching device (T5,T6) is configured to switch at a second switching frequency, wherein the second switching frequency is higher than the first switching frequency of the low frequency power switching devices (T1,T2,T3,T4) of the low switching frequency stage (100), **characterized in that**
each high frequency power switching device (T5, T6) of the high switching frequency stage (200) is electrically connected in parallel to a low frequency power switching device (T7, T8).

2. The device according to claim 1, wherein
the low switching frequency stage (100) comprises,
a first set (110) of two low frequency power switching devices (T1, T2) electrically coupled in series with each other, the first set (110) having a first output terminal (Mp) arranged between the power switching devices (T1, T2), and
a second set (120) of two low frequency power
switching devices (T3, T4)
electrically coupled in series with each other, the second set (120) having a second output terminal (Mn) arranged between the power switching devices (T3, T4), and wherein
the high switching frequency stage (200) comprises,
a first hybrid switch (210) coupled to the first output terminal (Mp); and
a second hybrid switch (220) coupled to the second output terminal (Mn),
wherein each hybrid switch (210,220) comprises at least a high frequency power switching device (T5, T6) electrically connected in parallel with a low frequency power switching device (T7, T8).

3. The device according to claim 2, wherein the high switching frequency stage (200) comprises more than one group of first hybrid switches (210A - 210N) and more than one group of second hybrid switches (220A - 220N) arranged between the low switching frequency stage (100) and the output (A) of the device.

4. The device according to claim 3, wherein the groups of first hybrid switches (210A - 210N) are electrically connected in series.

5. The device according to claim 3 or 4, wherein, wherein the groups of second hybrid switches (220A - 220N) are electrically connected in series.

6. The device according to any of the preceding claims, further comprising more than one high switching frequency stages (200A - 200M), wherein the more than one high switching frequency stages (200) are electrically connected in parallel.

7. The device according to claim 6, wherein a small-sized inductive filter (L) is arranged at the output of each high switching frequency stage (200).

8. The device according to any of the preceding claims, wherein the low frequency power switching devices (T1, T2, T3, T4, T7, T8) are silicon-based switching devices and the high frequency power switching device (T5, T6) are wide-bandgap switching devices.

9. The device according to claim 8, wherein the silicon-based switching devices are IGBTs, IGCTs, Si MOSFETs or Thyristors.

10. The device according to claim 8 or 9, wherein the wide bandgap switching devices are silicon carbide MOSFETs, silicon carbide FETs, gallium nitride FETs or diamond semiconductors.

11. The device according to any of the preceding claims, wherein the high frequency power switching devices (T5,T6) of the high switching frequency stage (200) have an current rating equal to or lower than the current rating of the low frequency power switching device (T7,T8) of said high switching frequency stage (200).

12. The device according to any of the preceding claims, wherein each high frequency power switching device (T5,T6) electrically connected in parallel with a low frequency power switching device (T7,T8) is configured to turns-on before and turns-off after the low frequency power switching device (T7,T8) .
